(19) Europäisches Patentamt
European Patent Office
Office européen des brevets

(11) EP 1 408 068 A1

(12) **EUROPEAN PATENT APPLICATION**
published in accordance with Art. 158(3) EPC

(43) Date of publication:
**14.04.2004 Bulletin 2004/16**

(21) Application number: **02728178.1**

(22) Date of filing: **28.05.2002**

(51) Int Cl.[7]: **C08J 5/00**, C08L 25/04, C08L 71/12 // (C08L25/04, 71:12)

(86) International application number:
**PCT/JP2002/005157**

(87) International publication number:
**WO 2002/098960 (12.12.2002 Gazette 2002/50)**

(84) Designated Contracting States:
**AT BE CH CY DE DK ES FI FR GB GR IE IT LI LU MC NL PT SE TR**

(30) Priority: **30.05.2001 JP 2001161729**
**30.05.2001 JP 2001161730**
**30.05.2001 JP 2001161731**

(71) Applicant: **IDEMITSU PETROCHEMICAL CO., LTD.**
**Tokyo 130-0015 (JP)**

(72) Inventors:
- **OKADA, Akihiko**
  **Ichihara-shi, Chiba 299-0107 (JP)**
- **AOYAMA, Takuma**
  **Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

(54) **CHEMICAL;RESISTANT POLYSTYRENE RESIN COMPOSITION AND MOLDED ARTICLE**

(57) A chemical-resistant polystyrene-based resin molded article obtained by molding a styrene-based resin composition comprising component (A): a styrene-based polymer having an atactic structure or a mixture of the styrene base polymer having an atactic structure and polyphenylene ether in a total amount of 10 to 95 parts by weight and component (B): a styrene-based polymer having primarily a syndiotactic structure in an amount of 90 to 5 parts by weight, wherein the component (B) has a relative crystallinity of 30 % or less in a depth of up to 0.5 mm from the surface of the above molded article. By incorporating a rubber component which is a block polymer having a styrene content of 70 mass % or more in an amount of 3 to 97 parts by weight, a molded article excellent in transparency and chemical resistance can be obtained.

EP 1 408 068 A1

## Description

### BACKGROUND OF THE INVENTION

The first aspect of the present invention relates to a chemical-resistant polystyrene-based resin molded article, more specifically to a chemical-resistant polystyrene-based resin molded article provided with a chemical-resistance by blending with a styrene-based polymer (hereinafter referred to as a syndiotactic polystyrene (B)) having primarily a syndiotactic structure, in which a crystallinity is not higher than a fixed value.

Also, the second aspect of the present invention relates to a chemical-resistant polystyrene-based resin molded article, more specifically to a chemical-resistant polystyrene-based resin molded article provided with a chemical resistance by blending with a styrene-based polymer (hereinafter referred to as a syndiotactic polystyrene (c)) having primarily a syndiotactic structure, in which a peak value of a crystallinity is not higher than a fixed value.

Further, the third aspect of the present invention relates to a chemical-resistant polystyrene-based resin molded article having an excellent transparency, more specifically to a chemical-resistant polystyrene-based resin molded article having an excellent transparency in which a transparency get compatible with a chemical resistance under distortion by blending with a styrene-based block polymer having a styrene content of 70 mass % or more as a rubber component.

### RELATED ART

A polystyrene-based resin obtained by radically polymerizing an aromatic vinyl compound is inexpensive and has so far been applied to a great variety of uses. However, because of an atactic structure thereof, it is amorphous and is not necessarily satisfactory as far as a chemical resistance is concerned, and this has narrowed the application range thereof.

Various detergents and toiletry-related goods which have been put to practical use in recent years bring about cracking and cleaving of polystyrene-based resins in many cases, so that the polystyrene-based resins are strongly required to be improved in a chemical resistance.

In order to improve a chemical resistance of a polystyrene-based resin having an atactic structure (hereinafter referred to as atactic polystyrene), it has been tried to copolymerize styrene with a polar monomer such as acrylonitrile, methacrylate, acrylate, maleic anhydride and maleimide to thereby improve the chemical resistance.

However, these copolymers have had the problems of a restriction in a random copolymerization ratio, a reduction in productivity, a change in a color tone, the presence of an odor, a difficulty in mixing recycle with the other polystyrene-based resins and a production in cyan gas in incinerating.

Accordingly, syndiotactic polystyrene having crystallinity has been developed, and a composition of syndiotactic polystyrene has been proposed for the purpose of elevating a chemical resistance of atactic polystyrene (Japanese Patent Application Laid-Open No. 279347/1999 and Japanese Patent Application Laid-Open No. 279349/1999).

However, when a blended matter of syndiotactic polystyrene and atactic polystyrene was molded, the satisfactory chemical resistance was not necessarily revealed depending on the state of the molded article.

Further, conventional syndiotactic polystyrene has a too fast crystallizing speed, and therefore observed is the phenomenon that when a blended matter of syndiotactic polystyrene and atactic polystyrene is molded, partial crystallization is caused in the molded article.

Accordingly, though this molded article is improved in a chemical resistance as compared with a molded article produced from atactic polystyrene, the effect thereof is not sufficiently high, and the impact strength and the elongation are reduced, so that the application range thereof has been narrowed.

The first aspect of the present invention has been made from the viewpoints described above, and an object thereof is to provide a chemical-resistant polystyrene-based resin molded article which comprises a composition prepared by blending syndiotactic polystyrene (B) with atactic polystyrene or atactic polystyrene and polyphenylene ether and in which a chemical resistance is further effectively revealed.

Also, an object of the second aspect of the present invention is to provide a resin composition which can be further improved in a chemical resistance as compared with a composition blended with conventional syndiotactic polystyrene by blending specific syndiotactic polystyrene (C) with atactic polystyrene or atactic polystyrene and polyphenylene ether and which can reveal satisfactory physical properties and a molded article thereof.

In recent years, uses of molded articles to which a transparency is required grow larger, and materials provided with a transparency in combination with a chemical resistance are strongly required to be developed.

A polystyrene-based resin obtained by radically polymerizing an aromatic vinyl compound is inexpensive and has so far been applied to a great variety of uses. However, because of an atactic structure thereof, it is amorphous and has not necessarily been satisfactory as far as a chemical resistance is concerned.

In particular, GPPS (general purpose polystyrene) containing no rubber component has a transparency but

is inferior to HIPS (high impact polystyrene) in toughness and a chemical resistance, and therefore the application range thereof has been narrowed.

A method in which a refractive index of a monomer used for a matrix component for HIPS and ABS (acrylonitrile-butadiene-styrene) or a rubber component are controlled by copolymerization to achieve transparency is available in order to improve a transparency of a styrene polymer having an atactic structure (hereinafter referred to as atactic polystyrene).

To be specific, it is tried to improve the transparency by copolymerizing styrene with a polar monomer such as acrylonitrile, methacrylate, acrylate, maleic anhydride and maleimides.

However, these copolymers have had the problems of a restriction in a random copolymerization ratio, a reduction in productivity, a change in a color tone, the presence of an odor and a production in cyan gas in incinerating. Further, these copolymers are different from polystyrene in terms of a chemical structure, and therefore they have had the problem that they are not readily miscible with polystyrene and blended recycling is difficult.

Further, the chemical resistance has not necessarily been satisfactory as well.

Then, syndiotactic polystyrene having crystallinity has been developed, and a composition provided with a transparency and a chemical resistance by syndiotactic polystyrene alone or a blending thereof with GPPS has been proposed (Japanese Patent Application Laid-Open No. 279347/1999 and Japanese Patent Application Laid-Open No. 279349/1999).

However, when this composition is molded, a toughness of the molded article cannot exceed the range of GPPS, and prevention of cleaving caused by chemicals under distortion has not yet been satisfactory, and therefore the application range thereof has been narrowed.

Adding of a rubber component to syndiotactic polystyrene or blending of syndiotactic polystyrene with HIPS has made it possible to improve the toughness and cleaving caused by chemicals under distortion but has made it impossible to maintain the transparency.

The third aspect of the present invention has been made from the viewpoints described above, and an object thereof is to provide a chemical-resistant polystyrene-based resin composition having an excellent transparency which provides a molded article provided with a transparency in combination with a chemical resistance under distortion by adding a specific rubber component to syndiotactic polystyrene, syndiotactic polystyrene and atactic polystyrene or syndiotactic polystyrene, atactic polystyrene and polyphenylene ether.

## DISCLOSURE OF THE INVENTION

Intensive researches repeated by the present inventors in order to overcome the problems described above have resulted in first paying attentions to a crystallinity of syndiotactic polystyrene (B).

Then, they have found that a chemical resistance is further effectively revealed in a molded article which comprises a composition prepared by blending the syndiotactic polystyrene (B) with atactic polystyrene or atactic polystyrene and polyphenylene ether and which has a relative crystallinity of not higher than a fixed value.

That is, conventional resins have to be improved in a crystallinity in order to reveal a chemical resistance, but to be surprising, it has been found that a chemical resistance of a molded article in which a relative crystallinity is controlled to not higher than a fixed value can effectively be revealed by blending the syndiotactic polystyrene (B) with atactic polystyrene or atactic polystyrene and polyphenylene ether.

Also, intensive researches repeated by the present inventors in order to develop a polystyrene-based resin composition having the preferred characteristics described above have resulted in finding that the satisfactory chemical resistance and physical properties can be revealed by blending syndiotactic polystyrene (C) having a specific crystallizing temperature (Tc).

Further, intensive researches repeated by the present inventors in order to overcome the problems described above have resulted in finding that a molded article having both of a transparency and a chemical resistance under distortion is obtained by using a styrene-based block polymer having a styrene content of 70 mass % or more as a rubber component.

The present invention has been completed based on such knowledges.

That is, the first aspect of the present invention provides a chemical-resistant polystyrene-based resin molded article obtained by molding a styrene-based resin composition comprising component (A): a styrene-based polymer having an atactic structure or a mixture of the styrene base polymer having an atactic structure and polyphenylene ether in a total amount of 10 to 95 parts by weight and component (B): a styrene-based polymer having primarily a syndiotactic structure in an amount of 90 to 5 parts by weight, wherein the component (B) has a relative crystallinity of 30 % or less in a depth of up to 0.5 mm from the surface of the above molded article.

Also, the second aspect of the present invention provides a chemical-resistant polystyrene-based resin composition comprising component (A): a styrene-based polymer having an atactic structure or a mixture of the styrene-based polymer having an atactic structure and polyphenylene ether in a total amount of 10 to 95 parts by weight and

component (C): a styrene-based polymer having a syndiotactic structure in which a crystallizing temperature (Tc) has a peak value of 220°C or lower when lowering the temperature from 300°C at a cooling rate of 20°C/minute by means of a differential scanning colorimeter (DSC) in an amount of 90 to 5 parts by weight.

Further, the third aspect of the present invention provides a chemical-resistant polystyrene-based resin composition having an excellent transparency, comprising component (D): (d1) a styrene base polymer having primarily a syndiotactic structure in an amount of 97 to 3 parts by weight or (d2) the styrene-based polymer having primarily a syndiotactic structure or at least one of a styrene base polymer having an atactic structure or polyphenylene ether in a total amount of 97 to 3 parts by weight and component (E): a rubber component which is a block polymer having a styrene content of 70 mass % or more in an amount of 3 to 97 parts by weight, wherein the styrene-based polymer having primarily a syndiotactic structure has a content of 3 parts by weight or more per total 100 parts by weight of the component (D) and the component (E); and a molded article thereof.

BEST MODE FOR CARRYING OUT THE INVENTION

The atactic polystyrene of the component (A) used in the first and second aspects of the present invention is a polymer which is obtained by a polymerizing method such as solution polymerization, bulk polymerization, suspension polymerization and bulk-suspension polymerization comprising at least one aromatic vinyl compound represented by the following Formula (I):

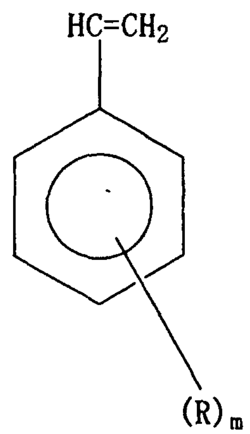

· · · (I)

(wherein **R** represents a hydrogen atom, a halogen atom or a substituent containing at least one of a carbon atom, an oxygen atom, a nitrogen atom, a sulfur atom, a phosphorus atom, a selenium atom, a tin atom and a silicon atom; and **m** represents an integer of 1 to 3, provided that when **m** is plural, respective **R** may be the same or different), a copolymer of at least one other vinyl monomer which is copolymerizable with the at least one aromatic vinyl compound, or a hydrogenated polymer of these polymers and a mixture thereof.

The preferred aromatic vinyl compound includes styrene, alkylstyrens such as α-methylstyrene, methylstyrene, ethylstyrene, isopropylstyrene and tertiary butylstyrene, phenylstyrene, vinylstyrene, chlorostyrene, bromostyrene, fluorostyrene, chloromethylstyrene, methoxystyrene and ethoxystyrene, and they are used alone or in combination of two or more kinds thereof.

Among them, the particularly preferred aromatic vinyl compounds are styrene, p-methylstyrene, m-methylstyrene, p-tertiary butylstyrene, p-chlorostyrene, m-chlorostyrene and p-fluorostyrene.

The other vinyl monomer copolymerizable with the aromatic vinyl compound described above includes vinyl cyan compounds such as acrylonitrile and methacrylonitrile, acrylic acid esters such as methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate and benzyl acrylate, methacrylic acid esters such as methyl methacrylate, ethyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate and benzyl methacrylate and maleimide base compounds such as maleimide, N-methylmaleimide, N-ethylmaleimide, N-butylmaleimide, N-laurylmaleimide, N-cyclohexylmaleimide, N-phenylmaleimide and N-(p-boromophenyl)maleimides.

The rubber-like polymer copolymerizable with the aromatic vinyl compound described above includes diene base rubber such as polybutadiene, styrene-butadiene copolymers, acrylonitrile-butadiene copolymers and polyisoprene, non-diene base rubber such as ethylene-α-olefin copolymers, ethylene-α-olefin-polyene copolymers and polyacrylates, styrene-butadiene block copolymers, hydrogenated styrene-butadiene block copolymers, ethylene-propylene elastomers, styrene-grafted-ethylene-propylene elastomers, ethylene base ionomer resins and hydrogenated styrene-isoprene copolymers.

In the first and the second aspects of the present invention, the atactic polystyrene of the component (A) shall not specifically be restricted in a molecular weight thereof, and in general, the weight average molecular weight is 10,000 or more, preferably 50,000 or more.

In this case, when the weight average molecular weight is less than 10,000, the resultant molded article is reduced in a thermal property and a mechanical property, and therefore it is not preferred.

Further, the molecular weight distribution shall not be restricted in a range thereof, and various ones can be applied.

The atactic polystyrene of the component (D) used in the third aspect of the present invention is a polymer which is obtained by a polymerizing method such as solution polymerization, bulk polymerization, suspension polymerization and bulk-suspension polymerization and which comprises at least one aromatic vinyl compound represented by the following Formula (I):

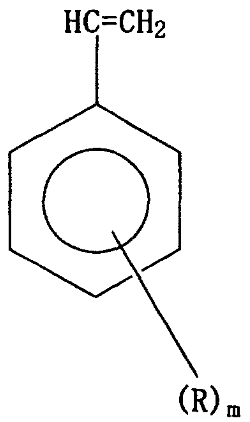

· · · (I)

(wherein **R** represents a hydrogen atom, a halogen atom or a substituent containing at least one of a carbon atom, an oxygen atom, a nitrogen atom, a sulfur atom, a phosphorus atom, a selenium atom, a tin atom and a silicon atom; and **m** represents an integer of 1 to 3, provided that when **m** is plural, respective **R** may be the same or different).

The preferred aromatic vinyl compound includes styrene, alkylstyrens such as α-methylstyrene, methylstyrene, ethylstyrene, isopropylstyrene and tertiary butylstyrene, phenylstyrene, vinylstyrene, chlorostyrene, bromostyrene, fluorostyrene, chloromethylstyrene, methoxystyrene and ethoxystyrene, and they are used alone or in combination of two or more kinds thereof.

Among them, the particularly preferred aromatic vinyl compounds are styrene, p-methylstyrene, m-methylstyrene, p-tertiary butylstyrene, p-chlorostyrene, m-chlorostyrene and p-fluorostyrene.

The atactic polystyrene of the component (D) shall not specifically be restricted in a molecular weight thereof, and in general, the weight average molecular weight is 10,000 or more, preferably 50,000 or more.

In this case, when the weight average molecular weight is less than 10,000, the resulting molded article is reduced in a thermal property and a mechanical property, and therefore it is not preferred.

Further, the molecular weight distribution shall not be restricted in a range thereof, and various ones can be applied.

In the first, second and third aspects of the present invention, polyphenylene ether can be employed as a part of the component (A) or the component (D) in order to improve a heat resistance of the molded article.

Polyphenylene ether is a publicly known compound and can be referred to U.S. Patents No. 3306874, 3306875, 3257357 and 3257358 in order to use for the purpose described above.

Polyphenylene ether is usually prepared by an oxidation coupling reaction in which a homopolymer or a copolymer is produced in the presence of a copper amine complex or one or more two- or three-substituted phenol.

In this case, a copper amine complex derived from primary, secondary or tertiary amine can be used.

The examples of polyphenylene ether include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isobutyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly(2-(4'-methylphenyl)-1,4-phenylene ether), poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly (2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly (2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether) and poly(2,6-dimethyl-1,4-phenylene ether).

Suited as well is, for example, a copolymer such as copolymers derived from two or more phenol compounds used for preparing the homopolymer described above.

Also, those obtained by modifying them with a modifying agent including maleic anhydride and fumaric anhydride are suitably used as well.

Further, included are, for example, a graft copolymer and a block copolymer of a vinyl aromatic compound such as polystyrene with the polyphenylene ether described above. Among them, poly(2,6-dimethyl-1,4-phenylene ether) is particularly preferred.

This polyphenylene ether shall not specifically be restricted in a molecular weight, and those having an intrinsic viscosity of 0.5 deciliter/g or less, preferably 0.45 deciliter/g or less measured in chloroform at 25°C are used.

When the intrinsic viscosity exceeds 0.5 deciliter/g, the fluidity in molding is reduced to a large extent in a certain case.

When polyphenylene ether is blended in the first and second aspects of the present invention, a blending proportion thereof shall not specifically be restricted, and it is preferably 5 to 80 mass %, more preferably 10 to 60 mass % based on the component (A).

When the blending proportion is smaller than 5 mass %, the heat resistance-improving effect is small, and when it exceeds 80 mass %, the fluidity in molding is reduced to a large extent in a certain case.

In the third aspect of the present invention, a blending proportion of the syndiotactic polystyrene, the atactic polystyrene and the polyphenylene ether each contained in the component (D) shall not specifically be restricted, and the syndiotactic polystyrene has to have a proportion of 3 parts by weight or more, preferably 5 parts by weight or more and more preferably 10 parts by weight or more per 100 parts by weight of the total weight of the component (D) and the component (E).

When the syndiotactic polystyrene has a proportion of less than 3 parts by weight, the chemical resistance-improving effect is reduced.

In the first and second aspects of the present invention, the component (A) can be used in combination with a rubber-like elastic body in order to elevate the impact resistance.

The specific examples of the rubber-like elastic body include natural rubber, polybutadiene, polyisoprene, polybutylene, neoprene, polysulfide rubber, thiocol rubber, acryl rubber, urethane rubber, silicon rubber, epichlorohydrin rubber, styrene-butadiene block copolymers (SBR), hydrogenated styrene-butadiene block copolymers (SEB, SEBC), styrene-butadiene-styrene block copolymers (SBS), hydrogenated styrene-butadiene-styrene block copolymers (SEBS), styrene-isoprene block copolymers (SIR), hydrogenated styrene-isoprene block copolymers (SEP), styrene-isoprene-styrene block copolymers (SIS), hydrogenated styrene-isoprene-styrene block copolymers (SEPS), ethylene propylene rubber (EPM), ethylene propylene diene rubber (EPDM), butadiene-acrylonitrile-styrene-core shell rubber (ABS), methyl methacrylate-butadiene-styrene-core shell rubber (MBS), methyl methacrylate-butyl acrylate-styrene-core shell rubber (MAS), octyl acrylate-butadiene-styrene-core shell rubber (MABS), alkyl acrylate-butadiene-acrylonitrile-styrene-core shell rubber (AABS), butadiene-styrene-core shell rubber (SBR), particulate elastic bodies of a core shell type such as siloxane-containing core shell rubber including methyl methacrylate-butyl acrylate-siloxane and rubbers obtained by modifying them.

Among them, SBR, SEB, SBS, SEBS, SIR, SEP, SIS, SEPS, core shell rubbers, EPM, EPDM and rubbers obtained by modifying them are preferably used.

These rubber-like elastic bodies can be used alone or in a blend of two or more kinds thereof.

A blending proportion of the rubber-like shall not specifically be restricted, and it is 50 mass % or less, preferably 40 mass % or less and more preferably 30 mass % or less based on the component (A).

When it exceeds 50 mass %, a reduction in the chemical resistance and the elastic modulus is brought about in a certain case.

The component (E) in the third aspect of the present invention is a rubber component, and a block polymer having a styrene content of 70 mass % or more is used therefor. The styrene content is preferably 75 mass %.

When the styrene content is less than 70 mass %, it is difficult to secure a satisfactory transparency in the molded article.

An upper limit of the styrene content shall not specifically be restricted, and it is preferably 95 mass % or less.

When the styrene content exceeds 95 mass %, the chemical resistance-improving effect under distortion is small, so that the rubber component has to be added in a large amount, and it is economically disadvantageous.

Such rubber component includes styrene-butadiene block copolymers (SBR), hydrogenated styrene-butadiene block copolymers (SEB, SEBC), styrene-butadiene-styrene block copolymers (SBS), hydrogenated styrene-butadiene-styrene block copolymers (SEBS), styrene-isoprene block copolymers (SIR), hydrogenated styrene-isoprene block copolymers (SEP), styrene-isoprene-styrene block copolymers (SIS), hydrogenated styrene-isoprene-styrene block copolymers (SEPS) or rubbers obtained by modifying them.

Among them, SBS, SEBS, SIS and SEPS are preferably used, and SEBS and SEPS are more preferably used from the viewpoint of the heat stability.

These rubber-like elastic bodies can be used alone or in a blend of two or more kinds thereof.

In the first, second and third aspects of the present invention, a syndiotactic structure in the styrene base polymer having primarily a syndiotactic polystyrene structure in the component (B), the component (C) and the component (D) is that the stereochemical structure has a syndiotactic structure, that is, a steric structure in which phenyl groups being side chains are positioned alternately in a reverse direction to a principal chain formed from a carbon-carbon bond, and the tacticity thereof is determined by a nuclear magnetic resonance ($^{13}C$-NMR) using isotopic carbon.

The tacticity determined by a $^{13}C$-NMR method can be shown by diad when a present proportion of plural continuous structural units are, for example, 2, triad when it is 3 and pentad when it is 5. The styrene-based polymer having primarily a syndiotactic structure referred to in the present invention is usually shown by polystyrene, poly (alkylstyrene), poly(halogenated styrene), poly(halogenated alkylstyrene), poly(alkoxystyrene), poly(vinyl benzoate), hydrogenated polymers thereof and mixtures thereof or copolymers comprising them as principal components each having a syndiotacticity of 75 % or more, preferably 85 % or more in terms of racemidiad or 30 % or more, preferably 50 % or more in terms of racemipentad.

In this case, poly(alkylstyrene) includes poly(methylstyrene), poly(ethylstyrene), poly(isopropylstyrene), poly (tertiary buthylstyrene), poly(phenylstyrene), poly(vinylnaphthalene) and poly(vinylstyrene), and poly(halogenated styrene) includes poly(chlorostyrene), poly(bromostyrene) and poly(fluorostyrene).

Further, poly(halogenated alkylstyrene) includes poly(chloromethylstyrene), and poly(alkoxystyrene) includes poly(methoxystyrene) and poly(ethoxystyrene).

These styrene-based polymers having a syndiotactic structure can be used alone or in combination of two or more kinds thereof.

Among them, the particularly preferred syndiotactic polystyrene includes polystyrene, poly(p-methylstyrene), poly(m-methylstyrene), poly(p-tertiary buthylstyrene), poly(p-chlorostyrene), poly(m-chlorostyrene), poly(p-fluorostyrene), hydrogenated polystyrenes and copolymers comprising these structural units.

The syndiotactic polystyrene (B) component in the molded article of the first aspect of the present invention has to have a crystallinity of 30 % or less in terms of a relative crystallinity in a depth of up to 0.5 mm from the surface of the molded article. This relative crystallinity is preferably 20 % or less, more preferably 10 % or less.

When this relative crystallinity exceeds 30 %, it is difficult to sufficiently reveal a chemical resistance of the molded article, and a reduction in glossiness and a physical property of the molded article is brought about in a certain case.

A method for controlling this crystallinity includes a method in which controlled are the resin temperature, the die temperature, the cooling speed, the design of the syndiotactic polystyrene (B) component, the additives, a proportion of the syndiotactic polystyrene component and the molecular weights and the added amounts of the atactic polystyrene component and the polyphenylene ether component.

Further, the syndiotactic polystyrene (C) used in the second aspect of the present invention has to have a peak value of 220°C or lower in a crystallizing temperature (Tc) when the temperature is lowered from 300°C at a cooling rate of 20°C/minute by means of a differential scanning colorimeter (DSC). This peak value in the crystallizing temperature is preferably 210°C or lower, more preferably 200°C or lower.

When this peak value in the crystallizing temperature exceeds 220°C, it is difficult to inhibit the crystallization of the syndiotactic polystyrene component in the molded article, and the component (A) and the component (C) stay in a heterogeneous mixing state, so that it is difficult to sufficiently reveal the chemical resistance. Further, a reduction in a dynamic characteristic and a surface characteristic of the molded article is brought about in a certain case.

The syndiotactic polystyrene having a peak value of 220°C or lower in Tc can be obtained by, for example, a method such as using a copolymer of styrene and substituted styrene, adding the polyphenylene ether component, using a low stereospecific polymer and adding a crystallizing rate-retarding agent such as fatty acid metal salts including montanoic acid metal salts (sodium montanoate and zinc montanoate).

A molecular weight of the syndiotactic polystyrenes in the first, second and third aspects of the present invention shall not specifically be restricted, and the weight average molecular weight in terms of polystyrene measured at 135°C by a GPC (gel permeation chromatography) method using trichlorobenzene as a solvent is 10,000 or more, preferably 50,000 or more.

Further, the molecular weight distribution shall not specifically be restricted in a range thereof, and various ones can be applied.

In this case, when the weight average molecular weight is less than 10,000, the resulting composition or

molded article is reduced in a thermal property and a mechanical property, and therefore it is not preferred.

A melting point of the syndiotactic polystyrenes (B) and (D) in the first and third aspects of the present invention shall not specifically be restricted, and it is preferably 270°C or lower, more preferably 250°C or lower.

When the melting point exceeds 270°C, a temperature of 280 to 300°C is required in molding, and therefore a deterioration in the moldability of the composition and a reduction in the physical properties caused by heat deterioration are likely to be brought about.

Also, the syndiotactic polystyrene (D) in the third aspect of the present invention has a peak value of preferably 230°C or lower, more preferably 200°C or lower in a crystallizing temperature (Tc) when the temperature is lowered from 300°C with a cooling rate of 20°C/minute by means of a differential scanning colorimeter (DSC).

When this peak value in the crystallizing temperature exceeds 230°C, the syndiotactic polystyrene component is crystallized in the molded article, and therefore it is difficult to maintain a transparency of the molded article.

A method for preparing the syndiotactic polystyrenes in the first, second and third aspects of the present invention includes, for example, a method in which a styrene base monomer (a monomer corresponding to the styrene base polymer described above) is polymerized in an inert hydrocarbon solvent or in the absence of a solvent using a titanium compound and a condensation product of water and trialkylaluminum as a catalyst (Japanese Patent Application Laid-Open No. 187708/1987).

Further, poly(halogenated alkylstyrene) and halogenated polymers thereof can be obtained as well, for example, by methods described in Japanese Patent Application Laid-Open No. 46912/1989 and Japanese Patent Application Laid-Open No. 178505/1989.

In the resin composition according to the first aspect of the present invention, a blending amount of the component (B) is 90 to 5 parts by weight, preferably 80 to 10 parts by weight and more preferably 50 to 15 parts by weight per 100 parts by weight of the total amount of the component (A) and the component (B).

When a blending amount of the component (B) is less than 5 parts by weight, an effect for improving the chemical resistance is not observed as a matter of fact, and when it exceeds 90 parts by weight, it is disadvantageous in terms of the cost. Accordingly, both are not preferred.

Also, in the resin composition of the second aspect of the present invention, a blending amount of the component (C) is 90 to 5 parts by weight, preferably 80 to 10 parts by weight and more preferably 50 to 15 parts by weight per 100 parts by weight of the total amount of the component (A) and the component (C).

When a blending amount of the component (C) is less than 5 parts by weight, an effect for improving the chemical resistance is not observed as a matter of fact, and when it exceeds 90 parts by weight, it is disadvantageous in terms of the cost. Accordingly, both are not preferred.

Further, in the resin composition of the third aspect of the present invention, a blending amount of the component (D) is 3 to 97 parts by weight, preferably 5 to 90 parts by weight and more preferably 10 to 80 parts by weight per 100 parts by weight of the total amount of the component (D) and the component (E).

When a blending amount of the component (D) is less than 3 parts by weight, the chemical resistance-improving effect under distortion is small, and when it exceeds 97 parts by weight, a blending amount of the syndiotactic polystyrene is reduced, so that the chemical resistance is reduced as well. Accordingly, both are not preferred.

In the resin compositions according to the first, second and third aspects of the present invention, additives such as an inorganic filler, an antioxidant, a nuclear agent, a plasticizer, a mold releasing agent, a flame retardant, a flame retardant aid, a pigment, a dye, carbon black and an antistatic agent and the other thermoplastic resins can be blended as long as the objects of the present invention are not inhibited.

They each can be used alone or in combination of two or more kinds thereof.

The inorganic filler includes glass fibers, carbon fibers, whiskers, talc, carbon black, graphite, titanium dioxide, silica, mica, calcium carbonate, calcium sulfate, barium carbonate, magnesium carbonate, magnesium sulfate, barium sulfate, oxysulfate, tin oxide, alumina, kaolin, silicon carbide, metal powder, glass powder, glass flake and glass beads.

Compounds optionally selected from publicly known compounds of a phosphorus base, a phenol base and a sulfur base can be used as the antioxidant.

Compounds optionally selected from publicly known compounds such as metal salts of carboxylic acids including aluminum di(p-t-butylbenzoate), metal salts of phosphoric acid including sodium methylenebis(2,4-di-t-butylphenol)acid phosphate, talc and phthalocyanine derivatives can be used as the nuclear agent.

Compounds optionally selected from publicly known compounds such as polyethylene glycol, polyamide oligomers, ethylenebisstearoamide, phthalic acid esters, polystyrene oligomers, polyethylene waxes, mineral oils and silicon oils can be used as the plasticizer.

Compounds optionally selected from publicly known compounds such as polyethylene waxes, silicon oils, long chain carboxylic acids and long chain carboxylic acid metal salts can be used as the mold releasing agent.

Compounds optionally selected from publicly known compounds such as brominated polymers including brominated polystyrene, brominated syndiotactic polystyrene and brominated polyphenylene ether, brominated aromatic compounds including brominated diphenylalkanes and brominated diphenyl ethers and phosphorus base flame retardants including tricresyl phosphate, triphenyl phosphate and tris-3-chloropropyl phosphate can be used as the flame retardant.

Compounds optionally selected from antimony compounds including antimony trioxide and the other publicly known compounds can be used as a flame retardant aid.

Compounds optionally selected from publicly known compounds such as Teflon can be used as dripping preventive.

Capable of being employed as the thermoplastic resins in the first and second aspects of the present invention are compounds optionally selected from publicly known compounds such as polystyrene-based resins including AS (acrylonitrile-styrene) and ABS (acrylonitrile-butadiene-styrene), polyester base resins including polycarbonate, polyethylene terephthalate and polybutylene terephthalate, polyamide base resins including polyamide 6 and polyamide 6, 6, PPS (polyphenylene sulfide) and polyethers.

Polycarbonates and polyethers can be selected and used as the thermoplastic resin in the third aspect of the present invention.

A method for preparing the polystyrene-based resin compositions according to the first, second and third aspects of the present invention shall not specifically be restricted and they can be prepared by publicly known methods.

The polystyrene-based resin compositions can be obtained by melting and mixing or dry-blending the components and various additives each described above by means of a ribbon blender, a Henschel mixer, a Banbury mixer, a drum tumbler, a single shaft screw extruding machine, a double shaft screw extruding machine, a cokneader and a multi-shaft screw extruding machine.

The molding method shall not specifically be restricted, and they can be molded by publicly known methods such as injection molding, extrusion molding, heat molding and foaming molding.

In the second and third aspects of the present invention, when they can be molded by publicly known methods such as injection molding, extrusion molding, heat molding and foaming molding, a cylinder temperature in molding has to be not lower than a melting point of the syndiotactic polystyrene in the component (C) or the component (D).

When they are molded at a temperature of not higher than a melting point of the syndiotactic polystyrene, it is difficult to reveal the sufficiently high transparency, chemical resistance and physical properties.

An upper limit of the cylinder temperature is varied depending on the compositions of the materials, and it is usually 300°C or lower, preferably 280°C or lower and more preferably 260°C or lower. When the molding temperature exceeds 300°C, a reduction in the molding cycle (an increase in the cooling time), deterioration in the shrink of the molded article and degradation in the materials in residence are brought about in a certain case.

Controlling of the die temperature and cooling by a cooling roll are important in order to inhibit the syndiotactic polystyrene component from being crystallized in injection molding and extrusion molding.

The die temperature in injection molding is, though varied depending on the compositions of the materials, preferably about 40°C.

The chemical-resistant polystyrene resin molded articles in the first, second and third aspects of the present invention have durability against surfactants for a kitchen, a bath room, a toilet and others, fungicides, cleansing agents, toiletries such as shampoos, rinses, body soaps, bathing agents, lip sticks and anti-suntan agents, edible oils such as salad oil, sesame oil, soybean oil and cotton seed oil, foods such as margarine and butter and various chemicals and oils such as greases, machine oils, cutting oils and fuel oils.

The chemical-resistant polystyrene resin molded articles in the first and second aspects of the present invention can be used for various applications in which a chemical resistance is required, and the applications thereof shall not specifically be restricted.

The chemical-resistant polystyrene resin molded article in the third aspect of the present invention can be used for various applications in which a chemical resistance and a transparency are required, and the applications thereof shall not specifically be restricted.

The uses for car components include radiator grills, grills, marks, back panels, door mirrors, wheel caps, air spoilers and cowls for two wheelers as exterior parts and instrument panels, meter hoods, pillars, glove boxes, console boxes, speaker boxes, rids and battery containers s as interior parts.

The uses for electric appliances include housings, chassis, cassette cases, CD magazines and remote controller cases for AV equipment; linings, trays, arms, door caps and handles for electric refrigerators; housings, handles, pipes and inlet ports for electric cleaners; housings, fans, remote controller cases; drain pans and back panels for air conditioners; and other parts for electric fans, ventilation fans, washing machines; lighting equipments and battery cases.

The uses for telephones and communication equipments include housings, receivers and mechanical chassis.

The uses for the other equipments include machines, registers, typewriters, calculators, optical equipments and musical instruments.

Further, they are used for miscellaneous goods, remote control cars, radio control cars, blocks, parts for pinball machines, writing instruments, trays for writing instruments, toys such as surfing boards and helmets, stationeries and leisure and sporting goods.

They are used as well for housing facilities such as toilet seats, toilet lids, tanks, showers, dressing tables, storage panels in a bath room and faucet covers, household goods such as lunch boxes, various containers, pot parts and milk portions, building materials for housing parts and furnitures.

In respect to the uses for industrial structural materials, they are suitably used for applications such as pipes, vessels, trays, monoaxially and biaxially stretched films by extrusion molding and stretching, sheets and fibrous molded articles by spinning.

Next, the present invention shall be explained in further details with reference to examples, but the present invention shall by no means be restricted by these examples.

Examples 1 to 10 and Comparative Examples 1 to 14

Compounds shown in Table 1 were used as the component (A).

Table 1

| Code | Grade | |
|---|---|---|
| A-1 | HT52 | HIPS manufactured by Idemitsu Petrochemical Co., Ltd. |
| A-2 | YPX100L | Polyphenylene ether manufactured by Mitsubishi Chemical Gas Co., Ltd. |

Pelletized syndiotactic polystyrenes having properties shown in Table 2 were used as the component (B).

A weight average molecular weight (Mw) and a molecular weight distribution [Mw/Mn (Mn: number average molecular weight)] of the syndiotactic polystyrenes (B) were measured at 135°C in terms of polyethylene by gel permeation chromatography (GPC) using 1,2,4-trichlorobenzene as a solvent.

The melting points were measured by means of DSC (differential scanning colorimeter) and determined by melting peak positions observed when the temperature was raised at a heating rate of 20°C/minute.

A weight average molecular weight and the like of the syndiotactic polystyrenes (B) which were determined in the manners described above are shown in Table 2.

Table 2

| Code | | Weight average molecular weight | Molecular weight distribution | Melting point (°C) |
|---|---|---|---|---|
| B-1 | Styrene homopolymer | 200,000 | 2.1 | 270 |
| B-2 | Styrene-p-methylstyrene copolymer | 200,000 | 2.3 | 235 |

The component (A) and the component (B) each described above were dry-blended in a composition shown in Table 4 and extruded at a resin temperature of 280°C by means of a single shaft-extruding machine to obtain a strand, and this was pelletized.

In the comparative exemples, used as the other component was a nuclear agent NA11 (sodium methylenebis (2,4-di-t-butylphenol)acid phosphate, manufactured by Asahi Denka Ind. Co., Ltd.).

The pellets thus obtained were molded into a self-tap boss on conditions shown in Table 4 by means of an injection-molding machine, and it was evaluated by the following methods.

The results thereof are shown in Table 4. In Table 4, a percentage of the compositions shows mass %.

(1) Evaluation of relative crystallinity

A surface layer part of the molded article was sampled in a depth of up to 0.5 mm to determine an enthalpy ($\Delta H_{Tcc}$) in a crystallization peak and an enthalpy ($\Delta H_{Tm}$) in a melting peak observed in elevating the temperature (heating rate = 1°C/minute) by means of DSC, and the relative crystallinity was calculated in accordance with the following equation:

$$\text{relative crystallinity (\%)} = (|\Delta H_{Tm}| - |\Delta H_{Tcc}|)/\Delta H_{Tm} \times 100$$

(2) Evaluation of chemical resistance

A self-tap boss having a shape shown in Table 3 was molded, and a screw was clamped at a prescribed torque. Then, a chemical was applied on the periphery of the boss and left standing at a room temperature for 24 hours, and then the state thereof was observed and ranked.

Table 3

| Dimension of self-tap boss | Screw used | Test conditions | Chemical used | Evaluation criteria |
|---|---|---|---|---|
| 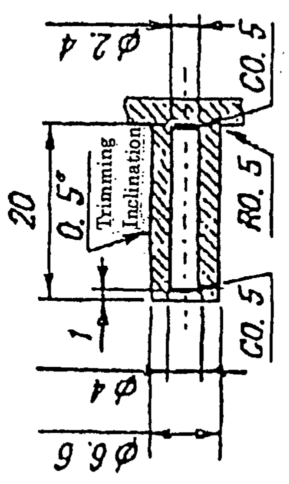<br>Unit: mm | Two kinds of JIS<br>Nominal diameter: 3.0 mm<br>Screw length: 12 mm<br>Pitch: 1.06 mm | Screw torque: 58.8 N·cm<br>Chemical was applied on the periphery of the boss<br>Left standing at a room temperature for 24 hours | Detergent (Magiclean, available from Kao Corporation) | AAA: No change recognized.<br>AA: There were slight amount of craze, whitening (no problem in practical use).<br>BB: There were cracks revealed<br>CCC: There were serious damage and large cracks. |

Table 4

| | Composition | | | | | | Molding conditions | | | Relative crystallinity | Chemical resistance |
|---|---|---|---|---|---|---|---|---|---|---|---|
| | Component (A) | | Component (B) | | Other | | Resin temperature | Die temperature | Cooling time | DSC | Self tap boss |
| | Code | % | Code | % | Nuclear agent | phr | °C | °C | seconds | % | visual |
| Example 1 | A-1 | 80 | B-1 | 20 | - | - | 280 | 40 | 30 | 15 | AA |
| Comparative Example 1 | | | | | | | 280 | 90 | 60 | 41 | BB |
| Comparative Example 2 | | | | | | | 260 | 40 | 30 | 100 | CCC |
| Comparative Example 3 | A-1 | 80 | B-1 | 20 | NA11 | 0.5 | 280 | 40 | 30 | 63 | BB |
| Example 2 | A-1 | 50 | B-1 | 50 | - | - | 280 | 40 | 30 | 27 | AA |
| Comparative Example 4 | | | | | | | 280 | 90 | 60 | 51 | BB |
| Comparative Example 5 | | | | | | | 260 | 40 | 30 | 100 | CCC |
| Example 3 | A-1 | 80 | B-2 | 20 | - | - | 260 | 40 | 30 | 5 | AAA |
| Comparative Example 6 | | | | | | | 260 | 90 | 60 | 34 | BB |
| Comparative Example 7 | | | | | | | 230 | 40 | 30 | 100 | CCC |
| Example 4 | A-1<br>A-2 | 60<br>20 | B-1 | 20 | - | - | 280 | 40 | 30 | 6 | AAA |
| Example 5 | | | | | | | 280 | 90 | 30 | 15 | AA |
| Comparative Example 8 | | | | | | | 280 | 120 | 60 | 36 | BB |
| Comparative Example 9 | | | | | | | 260 | 40 | 30 | 100 | CCC |

Table 4 (continued)

| | Composition | | | | | | Molding conditions | | | Relative crystallinity | Chemical resistance |
|---|---|---|---|---|---|---|---|---|---|---|---|
| | Component (A) | | Component (B) | | Other | | Resin temperature | Die temperature | Cooling time | DSC | Self-tap boss |
| | Code | % | Code | % | Nuclear agent | phr | °C | °C | second | % | visual |
| Comparative Example 10 | A-1<br>A-2 | 60<br>20 | B-1 | 20 | NA11 | 0.5 | 280 | 40 | 30 | 50 | BB |
| Example 6 | A-1<br>A-2 | 30<br>20 | B-1 | 50 | - | - | 280 | 40 | 30 | 11 | AAA |
| Example 7 | | | | | | | 280 | 90 | 30 | 24 | AA |
| Comparative Example 11 | | | | | | | 280 | 120 | 60 | 40 | BB |
| Comparative Example 12 | | | | | | | 260 | 40 | 30 | 100 | CCC |
| Example 8 | A-1<br>A-2 | 60<br>20 | B-2 | 20 | - | - | 260 | 40 | 30 | 0 | AAA |
| Example 9 | | | | | | | 260 | 90 | 30 | 5 | AAA |
| Example 10 | | | | | | | 260 | 120 | 60 | 26 | AAA |
| Comparative Example 13 | | | | | | | 260 | 120 | 120 | 38 | BB |
| Comparative Example 14 | | | | | | | 230 | 40 | 30 | 100 | CCC |

It can be found from the results shown in Table 4 that the chemical resistance is effectively revealed by controlling a relative crystallinity of the syndiotactic polystyrene component (B) in the molded article to 30 % or less.

Examples 11 to 20 and Comparative Examples 15 to 28

Compounds shown in Table 5 were used as the component (A).

Table 5

| Code | Grade | |
|---|---|---|
| A-1 | HT62 | HIPS manufactured by Idemitsu Petrochemical Co., Ltd. |
| A-2 | YPX100L | Polyphenylene ether manufactured by Mitsubishi Chemical Gas Co., Ltd. |

Syndiotactic polystyrenes having properties shown in Table 6 and polymers which were obtained by melt-blending this syndiotactic polystyrene with sodium montanoate or tin montanoate and which were palletized were used as the component (C).

A weight average molecular weight (Mw) and a molecular weight distribution [Mw/Mn (Mn: number average molecular weight)] of the syndiotactic polystyrenes were measured at 135°C in terms of polyethylene by gel permeation chromatography (GPC) using 1,2,4-trichlorobenzene as a solvent.

The peak values of Tc were measured by means of DSC (differential scanning colorimeter) and determined by peak positions observed when the temperature was lowered at a cooling rate of 20°C/minute after held at 300°C for 5 minutes. A weight average molecular weight and the like of the syndiotactic polystyrenes that were determined in the manners described above are shown in Table 6.

Table 6

| Code | | Weight average molecular weight | Molecular weight distribution | Tc (°C) |
|---|---|---|---|---|
| B-1 | Styrene homopolymer | 200,000 | 2.1 | 235 |
| B-2 | SPS/sodium montanoate = 100/3 (melt blend) | 200,000 | 2.1 | 219 |
| B-3 | SPS/tin montanoate = 100/3 (melt blend) | 200,000 | 2.1 | 210 |
| B-4 | Styrene-p-methylstyrene 7 mol % copolymer | 200,000 | 2.3 | 196 |
| B-5 | Styrene-p-methylstyrene 14 mol % copolymer | 200,000 | 2.3 | 183 |

The component (A) and the component (C) each described above, 0.2 phr of Irganox 1076 (antioxidant, available from Chiba Specialty Chemicals Co., Ltd.) and the other component were dry-blended in a composition shown in Table 8 and extruded at a resin temperature of 280°C by means of a single shaft extruding machine to obtain a strand, and this was pelletized.

Septon 8006 (SEBS, available from KURARAY CO., LTD.) as a rubber component was used as the other component.

The pellets thus obtained were molded into a self-tap boss on conditions shown in Table 7 by means of an injection-molding machine, and it was evaluated by the following methods.

The results thereof are shown in Table 8. In Table 8, a percentage of the compositions shows mass %.

(1) Izod impact strength (notched)

Measured in accordance with JIS-K7110.

(2) Evaluation of chemical resistance

A self-tap boss having a shape shown in Table 7 was molded, and a screw was clamped at a prescribed torque. Then, a chemical was applied on the periphery of the boss and left standing at a room temperature for 24 hours,

and then the state thereof was observed and ranked.

Table 7

| Dimension of self-tap boss | Screw used | Test conditions | Chemical used | Evaluation criteria |
|---|---|---|---|---|
| 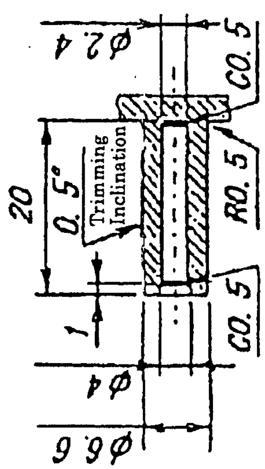<br>Unit: mm | Two kinds of JIS<br><br>Nominal diameter: 3.0 mm<br><br>Screw length: 12 mm<br><br>Pitch: 1.06 mm | Screw torque: 58.8 N·cm<br><br>Chemical was applied on the periphery of the boss<br><br>Left standing at a room temperature for 24 hours | Cleansing oil (Relusion cleansing oil available from ALBION CO, Ltd.) | AAA: No change recognized.<br><br>AA: There were slight amount of craze, whitening (no problem in practical use).<br><br>CCC: There were serious damage and large cracks. |

Table 8-1

| | Composition | | | | | | Molding conditions | | Dynamic characteristic | Chemical resistance |
|---|---|---|---|---|---|---|---|---|---|---|
| | Component (A) | | Component (C) | | Other | | Resin temperature | Die temperature | Izod impact strength | Self tap boss |
| | Code | % | Code | % | - | % | °C | °C | $J/M^2$ | visual |
| Example 11 | A-1 | 80 | B-2 | 20 | - | - | 280 | 40 | 11.5 | AA |
| Example 12 | A-1 | 80 | B-3 | 20 | - | - | 280 | 40 | 11.5 | AA |
| Example 13 | A-1 | 80 | B-4 | 20 | - | - | 280 | 40 | 12.0 | AAA |
| Example 14 | A-1 | 90 | B-5 | 10 | - | - | 280 | 40 | 12.5 | AA |
| Example 15 | A-1 | 80 | B-5 | 20 | - | - | 280 | 40 | 12.2 | AAA |
| Example 16 | A-1 | 50 | B-5 | 50 | - | - | 280 | 40 | 11.0 | AAA |
| Example 17 | A-1 | 50 | B-5 | 50 | * | 10 | 280 | 40 | 15.0 | AAA |
| Comparative Example 15 | A-1 | 100 | - | | - | - | 280 | 40 | 12.5 | CCC |
| Comparative Example 16 | A-1 | 90 | B-1 | 10 | - | - | 280 | 40 | 7.7 | CCC |
| Comparative Example 17 | A-1 | 80 | B-1 | 20 | - | - | 280 | 40 | 5.8 | CCC |
| Comparative Example 18 | A-1 | 50 | B-1 | 50 | - | - | 280 | 40 | 2.8 | CCC |
| Comparative Example 19 | A-1 | 50 | B-1 | 50 | * | 10 | 280 | 40 | 5.0 | CCC |

*: Septon 8006

Table 8-2

| | Composition | | | | | | Molding conditions | | Dynamic characteristic | Chemical resistance |
|---|---|---|---|---|---|---|---|---|---|---|
| | Component (A) | | Component (C) | | Other | | Resin temperature | Die temperature | Izod impact strength | Self tap boss |
| | Code | % | Code | % | - | % | °C | °C | $J/M^2$ | visual |
| Example 18 | A-1<br>A-2 | 60<br>20 | B-2 | 20 | - | - | 280 | 40 | 12.6 | AA |
| Example 19 | A-1<br>A-2 | 60<br>20 | B-3 | 20 | - | - | 280 | 40 | 12.7 | AA |
| Example 20 | A-1<br>A-2 | 60<br>20 | B-4 | 20 | - | - | 280 | 40 | 13.5 | AAA |
| Example 21 | A-1<br>A-2 | 70<br>20 | B-5 | 10 | - | - | 280 | 40 | 14.0 | AA |
| Example 22 | A-1<br>A-2 | 60<br>20 | B-5 | 20 | - | - | 280 | 40 | 13.8 | AAA |
| Example 23 | A-1<br>A-2 | 30<br>20 | B-5 | 50 | - | - | 280 | 40 | 12.0 | AAA |
| Example 24 | A-1<br>A-2 | 30<br>20 | B-5 | 50 | * | 10 | 280 | 40 | 17.0 | AAA |
| Comparative Example 20 | A-1<br>A-2 | 80<br>20 | - | - | - | - | 280 | 40 | 14.0 | CCC |
| Comparative Example 21 | A-1<br>A-2 | 70<br>20 | B-1 | 10 | - | - | 280 | 40 | 8.2 | CCC |
| Comparative Example 22 | A-1<br>A-2 | 60<br>20 | B-1 | 20 | - | - | 280 | 40 | 6.2 | CCC |
| Comparative Example 23 | A-1<br>A-2 | 30<br>20 | B-1 | 50 | - | - | 280 | 40 | 3.1 | CCC |
| Comparative Example 24 | A-1<br>A-2 | 30<br>20 | B-1 | 50 | * | 10 | 280 | 40 | 6.0 | CCC |

*: Septon 8006

It can be found from the results shown in Table 8 that when using the syndiotactic polystyrenes having a peak value of 220°C or lower in Tc, the impact strength and the chemical resistance are improved as compared with those observed when using the syndiotactic polystyrene having a peak value of exceeding 220°C in Tc.

Examples 21 to 35 and Comparative Examples 29 to 45

Pelletized syndiotactic polystyrenes having properties shown in Table 9 were used for the syndiotactic polystyrene in the component (D).
A weight average molecular weight (Mw) and a molecular weight distribution [Mw/Mn (Mn: number average molecular weight)] of the syndiotactic polystyrenes were measured at 135°C in terms of polyethylene by gel permeation chromatography (GPC) using 1,2,4-trichlorobenzene as a solvent.
The melting points were measured by means of DSC (differential scanning colorimeter) and determined by melting peak positions observed when the temperature was raised at a heating rate of 20°C/minute.
A weight average molecular weight and the like of the syndiotactic polystyrenes which were determined in the manners described above are shown in Table 2.

Table 9

| Code | | Weight average molecular weight | Molecular Weight distribution | Tc (°C) | Melting point (°C) |
|---|---|---|---|---|---|
| SPS-1 | Syndiotactic styrene homopolymer | 200,000 | 2.1 | 232 | 232 |
| SPS-2 | Syndiotactic styrene-p-methylstyrene copolymer | 200,000 | 2.3 | 232 | 232 |

Compounds shown in Table 10 were used for the atactic polystyrene and the polyphenylene ether in the component (D), and compounds shown in Table 11 were used for the rubber component in the component (E).

Table 10

| | Code | Grade | |
|---|---|---|---|
| Atactic polystyrene-based resin | GPPS-1 | US305 | Atactic polystyrene Available from Idemitsu Petrochemical Co., Ltd. |
| Polyphenylene Ether-based resin | PPE-1 | YPXL100L | Poly(2,6-dimethyl-1,4-phenylene ether) available from Mitsubishi Chemical Gas Co., Ltd. |

Table 11

| Code | Kind | Styrene content (mass %) |
|---|---|---|
| SEBS-1 | SEBS | 70 |
| SEBS-2 | SEBS | 80 |
| SEBS-3 | SEBS | 90 |
| SEBS-4 | SEBS | 65 |
| SBS-1 | SBS | 80 |
| SBS-2 | SBS | 60 |

The component (D) and the component (E) each described above were molten and mixed in a composition shown in Table 13 by means of a single shaft extruding machine and injection-molded into a flat plate of 50 mm × 50 mm × 3.2 mm and a bar having a thickness of 3.2 mm on the conditions of a resin temperature which was 10°C higher than a melting point of the syndiotactic polystyrene and a die temperature of 40°C.
The injection-molded articles thus obtained were evaluated by the following methods. The results thereof are shown in Table 13.
In Table 13, a percentage of the compositions shows mass %.

(1) Measurement of whole light transmittance

Measured in accordance with JIS-K7105 using the flat plate of 50 mm × 50 mm × 3.2 mm produced by injection-molding.

(2) Evaluation of chemical resistance

Distortion was applied onto the bar having a thickness of 3.2 mm produced by injection-molding, and then a gauze impregnated with a solvent was put on the distorted part. It was covered with a wrapping film in order to prevent the solvent from volatilizing and then left standing at a room temperature for 24 hours, and a change in the surface appearance and the presence of cracks were visually evaluated.

The solvent used for the evaluation and the conditions are shown in Table 12.

Table 12

| Code | Solvent used | Conditions | | Visual evaluation |
|---|---|---|---|---|
| | | Distortion (%) | Temperature Time | Evaluation criteria |
| (1) | Salad oil (available from Nisshin Oil Mills Co., Ltd.) | 0.2 | Room temperature Left standing for 24 hours | AAA: no change<br>AA: cloudy on surface or fine cracks produced<br>BB: roughened on surface, cracks produced<br>CCC: dissolved, large cracks produced, broken |
| (2) | Salad oil (available from Nisshin Oil Mills Co., Ltd.) | 0.4 | Room temperature Left standing for 24 hours | |

Table 13-1

| | Composition | | | | | | | | Molding condition | Transparency | Chemical resistance | |
|---|---|---|---|---|---|---|---|---|---|---|---|---|
| | Component (D) | | | | | | Component (E) | | Resin temperature | Whole light transmittance | Room temperature for 24 hours | |
| | SPS | Part | APS | Part | PPE | Part | Rubber | Part | °C | % | (1) | (2) |
| Example A1 | SPS-1 | 90 | - | - | - | - | SEBS-1 | 10 | 280 | 80.5 | AAA | AA |
| Example A2 | SPS-2 | 90 | - | - | - | - | SEBS-1 | 10 | 260 | 83.0 | AAA | AA |
| Example A3 | SPS-2 | 90 | - | - | - | - | SEBS-2 | 10 | 260 | 85.9 | AAA | AA |
| Example A4 | SPS-2 | 90 | - | - | - | - | SEBS-3 | 10 | 260 | 88.8 | AAA | AA |
| Example A5 | SPS-2 | 90 | - | - | - | - | SBS-1 | 10 | 260 | 89.2 | AAA | AA |
| Example A6 | SPS-2 | 95 | - | - | - | - | SEBS-2 | 5 | 260 | 90.0 | AAA | AA |
| Example A7 | SPS-2 | 80 | - | - | - | - | SEBS-2 | 20 | 260 | 84.0 | AAA | AAA |
| Example A8 | SPS-2 | 50 | - | - | - | - | SEBS-2 | 50 | 260 | 81.0 | AAA | AAA |
| Example A9 | SPS-2 | 10 | - | - | - | - | SEBS-2 | 90 | 260 | 86.4 | AA | AA |
| Example A10 | SPS-2 | 10 | GPPS-1 | 70 | - | - | SEBS-2 | 20 | 260 | 83.1 | AA | AA |
| Example A11 | SPS-2 | 40 | GPPS-1 | 40 | - | - | SEBS-2 | 20 | 260 | 83.9 | AAA | AAA |
| Example A12 | SPS-2 | 70 | GPPS-1 | 10 | - | - | SEBS-2 | 20 | 260 | 84.0 | AAA | AAA |
| Example A13 | SPS-2 | 10 | GPPS-1 | 60 | PPE-1 | 10 | SEBS-2 | 20 | 260 | 81.3 | AA | AA |
| Example A14 | SPS-2 | 40 | GPPS-1 | 30 | PPE-1 | 10 | SEBS-2 | 20 | 260 | 82.5 | AAA | AAA |
| Example A15 | SPS-2 | 70 | - | - | PPE-1 | 10 | SEBS-2 | 20 | 260 | 82.5 | AAA | AAA |

Table 13-2

| | Composition | | | | | | | | Molding condition | Transparency | Chemical resistance | |
|---|---|---|---|---|---|---|---|---|---|---|---|---|
| | Component (D) | | | | | | Component (E) | | Resin temperature | Whole light transmittance | Room temperature for 24 hours | |
| | SPS | Part | APS | Part | PPE | Part | Rubber | Part | °C | % | (1) | (2) |
| Comparative Example A1 | SPS-1 | 100 | - | - | - | - | - | - | 280 | 91.5 | AA | BB |
| Comparative Example A2 | SPS-2 | 100 | - | - | - | - | - | - | 260 | 93.2 | AA | BB |
| Comparative Example A3 | - | - | GPPS-1 | 100 | - | - | - | - | 280 | 94.0 | CCC | CCC |
| Comparative Example A4 | - | - | - | - | PPE-1 | 100 | - | - | 260 | 90.1 | CCC | CCC |
| Comparative Example A5 | SPS-1 | 90 | - | - | - | - | SEBS-4 | 10 | 280 | 60.4 | AAA | AA |
| Comparative Example A6 | SPS-2 | 90 | - | - | - | - | SEBS-4 | 10 | 260 | 62.9 | AAA | AA |
| Comparative Example A7 | SPS-2 | 90 | - | - | - | - | SBS-2 | 10 | 260 | 60.8 | AAA | AA |
| Comparative Example A8 | SPS-2 | 95 | - | - | - | - | SEBS-4 | 5 | 260 | 69.6 | AAA | AA |
| Comparative Example A9 | SPS-2 | 80 | - | - | - | - | SEBS-4 | 20 | 260 | 46.1 | AAA | AAA |

Table 13-2 (continued)

| | Composition | | | | | | | | Molding condition | Transparency | Chemical resistance | |
|---|---|---|---|---|---|---|---|---|---|---|---|---|
| | Component (D) | | | | | | Component (E) | | Resin temperature | Whole light transmittance | Room temperature for 24 hours | |
| | SPS | Part | APS | Part | PPE | Part | Rubber | Part | °C | % | (1) | (2) |
| Comparative Example A10 | SPS-2 | 50 | - | - | - | - | SEBS-4 | 50 | 260 | 30.0 | AAA | AAA |
| Comparative Example A11 | SPS-2 | 10 | - | - | - | - | SEBS-4 | 90 | 260 | 58.2 | AA | AA |
| Comparative Example A12 | SPS-2 | 10 | GPPS-1 | 70 | - | - | SEBS-4 | 20 | 260 | 43.3 | AA | AA |
| Comparative Example A13 | SPS-2 | 40 | GPPS-1 | 40 | - | - | SEBS-4 | 20 | 260 | 43.0 | AAA | AAA |
| Comparative Example A14 | SPS-2 | 70 | GPPS-1 | 10 | - | - | SEBS-4 | 20 | 260 | 43.1 | AAA | AAA |
| Comparative Example A15 | SPS-2 | 10 | GPPS-1 | 60 | PPE-1 | 10 | SEBS-4 | 20 | 260 | 45.0 | AA | AA |
| Comparative Example A16 | SPS-2 | 40 | GPPS-1 | 30 | PPE-1 | 10 | SEBS-4 | 20 | 260 | 48.5 | AAA | AAA |
| Comparative Example A17 | SPS-2 | 70 | - | - | PPE-1 | 10 | SEBS-4 | 20 | 260 | 48.1 | AAA | AAA |

It can be found from the results shown in Table 13 that the molded articles in which a transparency is compatible with a chemical resistance under distortion is obtained when using the styrene block copolymer having a styrene content of 70 mass % or more as the component (E).

INDUSTRIAL APPLICABILITY

A chemical resistance is effectively revealed in the chemical-resistant polystyrene-based resin molded article of the first aspect of the present invention, and it can be used for various applications in which the chemical resistance is required.

Also, the chemical-resistant polystyrene-based resin composition of the second aspect of the present invention effectively reveals a chemical resistance and is excellent as well in physical properties, and it can readily provide a molded article having excellent characteristics at a low cost.

Further, a transparency and a chemical resistance are effectively revealed in the chemical-resistant polystyrene-based resin composition of the third aspect of the present invention, and it can readily provide a molded article provided with a transparency in combination with a chemical resistance.

## Claims

1. A chemical-resistant polystyrene-based resin molded article obtained by molding a styrene-based resin composition comprising component (A): a styrene-based polymer having an atactic structure or a mixture of the styrene base polymer having an atactic structure and polyphenylene ether in a total amount of 10 to 95 parts by weight and component (B): a styrene-based polymer having primarily a syndiotactic structure in an amount of 90 to 5 parts by weight, wherein the component (B) has a relative crystallinity of 30 % or less in a depth of up to 0.5 mm from the surface of the above molded article.

2. A chemical-resistant polystyrene-based resin composition comprising component (A): a styrene-based polymer having an atactic structure or a mixture of the styrene-based polymer having an atactic structure and polyphenylene ether in a total amount of 10 to 95 parts by weight and component (C): a styrene-based polymer having a syndiotactic structure in which a crystallizing temperature (Tc) has a peak value of 220°C or lower when lowering the temperature from 300°C at a cooling rate of 20°C/minute by means of a differential scanning colorimeter (DSC) in an amount of 90 to 5 parts by weight.

3. The chemical-resistant polystyrene-based resin as described in claim 2, wherein the component (C) is a copolymer of styrene and nucleus-substituted styrene.

4. The chemical-resistant polystyrene-based resin as described in claim 2, wherein the component (C) is mixed with a fatty acid metal salt.

5. A molded article obtained by molding the composition as described in any of claims 2 to 4.

6. A chemical-resistant polystyrene-based resin composition having an excellent transparency, comprising component (D): (d1) a styrene base polymer having primarily a syndiotactic structure in an amount of 97 to 3 parts by weight or (d2) the styrene-based polymer having primarily a syndiotactic structure or at least one of a styrene base polymer having an atactic structure or polyphenylene ether in a total amount of 97 to 3 parts by weight and component (E): a rubber component which is a block polymer having a styrene content of 70 mass % or more in an amount of 3 to 97 parts by weight, wherein the styrene-based polymer having primarily a syndiotactic structure has a content of 3 parts by weight or more per total 100 parts by weight of the component (D) and the component (E).

7. The chemical-resistant polystyrene-based resin as described in claim 6, wherein the component (E) is a styrene-butadiene-styrene block copolymer (SBS), a styrene-isoprene-styrene block copolymer (SIS) or a hydrogenated product thereof.

8. The chemical-resistant polystyrene-based resin as described in claim 6, wherein the styrene base polymer having primarily a syndiotactic structure of the component (D) has a melting point of 250°C or lower and a crystallizing temperature (Tc) of 200°C or lower.

9. The chemical-resistant polystyrene-based resin as described in claim 6, wherein the styrene base polymer having

an atactic structure of the component (D) is a general purpose polystyrene (GPPS).

**10.** A molded article obtained by molding the composition as described in any of claims 6 to 9.

**INTERNATIONAL SEARCH REPORT**

International application No.
PCT/JP02/05157

A. CLASSIFICATION OF SUBJECT MATTER
Int.Cl[7] C08J5/00, C08L25/04, C08L71/12//C08L25:04, C08L71:12

According to International Patent Classification (IPC) or to both national classification and IPC

B. FIELDS SEARCHED

Minimum documentation searched (classification system followed by classification symbols)
Int.Cl[7] C08J5/00, C08L25/04, C08L71/12

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)
CAS ONLINE

C. DOCUMENTS CONSIDERED TO BE RELEVANT

| Category* | Citation of document, with indication, where appropriate, of the relevant passages | Relevant to claim No. |
|---|---|---|
| X<br>Y | EP 531705 A2 (IDEMITSU KOSAN CO., LTD.),<br>17 March, 1993 (17.03.93),<br>Claims; page 3, line 45 to page 4, line 4; page 9, table 1<br>& JP 5-43622 A<br>Page 3, Par. Nos. [0007] to [0008]; page 6, table 1<br>& CA 2075542 A & US 5357014 A<br>& TW 244353 A | 1<br>6-10 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 August, 2002 (15.08.02) | 27 August, 2002 (27.08.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/05157

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | EP 531931 A2 (IDEMITSU KOSAN CO., LTD.),<br>17 March, 1993 (17.03.93),<br>Claims; page 3, line 43 to page 4, line 23; page 4, Lines 38 to 49; page 10, table 1; page 11, table 2<br>& JP 5-69479 A<br>Page 3, Par. Nos. [0008], [0010]; page 4, Par. No. [0012]; page 6, table 1; page 7, table 2<br>& JP 5-111984 A & CA 2077944 A<br>& US 5460868 A & DE 69215464 E | 1<br>6-10 |
| X<br>Y | JP 11-166115 A (Sumitomo Chemical Co., Ltd.),<br>22 June, 1999 (22.06.99),<br>Claims; page 4, Par. No. [0026]; page 5, example 1; comparative example 1<br>(Family: none) | 1<br>6-10 |
| X<br>Y | JP 8-92385 A (Asahi Chemical Industry Co., Ltd.),<br>09 April, 1999 (09.04.99),<br>Claims; pages 2 to 3, Par. Nos. [0010] to [0011]; page 4, Par. No. [0024]<br>(Family: none) | 2,3,5<br>4 |
| Y | JP 8-132538 A (IDEMITSU PETROCHEMICAL CO., LTD.),<br>28 May, 1996 (28.05.96),<br>Claims; page 8, Par. No. [0031]<br>(Family: none) | 4 |
| Y | WO 01/25329 A1 (IDEMITSU PETROCHEMICAL CO., LTD.),<br>12 April, 2001 (12.04.01),<br>Claims; page 14, line 9 to page 15, line 20<br>& JP 2001-106851 A<br>Page 6, Par. Nos. [0034] to [0037]<br>& DE 10083296 T | 4 |
| Y | JP 2000-80228 A (Asahi Chemical Industry Co., Ltd.),<br>21 March, 2000 (21.03.00),<br>Claims; pages 3 to 4, Par. No. [0008]<br>(Family: none) | 6-10 |
| Y | JP 57-195139 A (Shin Nippon Seitetsu Kagaku Kogyo Kabushiki Kaisha),<br>30 November, 1982 (30.11.82),<br>Claims; page 2, upper right column, line 16 to page 2, lower left column, line 13<br>(Family: none) | 6-10 |
| Y | EP 930341 A2 (GENERAL ELECTRIC CO.),<br>21 July, 1999 (21.07.99),<br>Claims; page 4, Par. No. [0030]<br>& JP 11-323123 A<br>Page 5, Par. No. [0025]<br>& US 6037410 A & CN 1243847 A<br>& SG 71893 A1 | 6-10 |

Form PCT/ISA/210 (continuation of second sheet) (July 1998)

## INTERNATIONAL SEARCH REPORT

International application No.
PCT/JP02/05157

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-64411 A (Daicel Chemical Industries, Ltd.), 13 March, 2001 (13.03.01), Claims; page 4, Par. No. [0022] (Family: none) | 6-10 |
| P,X<br>P,A | JP 2002-113756 A (IDEMITSU PETROCHEMICAL CO., LTD.), 16 April, 2002 (16.04.02), Claims; pages 4 to 5, Par. Nos. [0020] to [0022]; pages 7 to 8, examples 3, 4, 6 (Family: none) | 1-5<br>6-10 |

Form PCT/ISA/210 (continuation of second sheet) (July 1998)